(19) Europäisches Patentamt

European Patent Office

Office européen des brevets

(11) Veröffentlichungsnummer: **0 305 915 B1**

# (12) EUROPÄISCHE PATENTSCHRIFT

(45) Veröffentlichungstag der Patentschrift: **11.11.92**

(21) Anmeldenummer: **88113925.7**

(22) Anmeldetag: **26.08.88**

(51) Int. Cl.⁵: **H02K 5/15**

(54) **Elektromotor geringer Leistung.**

(30) Priorität: **04.09.87 DE 3729574**

(43) Veröffentlichungstag der Anmeldung:
**08.03.89 Patentblatt 89/10**

(45) Bekanntmachung des Hinweises auf die
Patenterteilung:
**11.11.92 Patentblatt 92/46**

(84) Benannte Vertragsstaaten:
**DE IT NL**

(56) Entgegenhaltungen:
**EP-A- 0 168 744**
**DE-A- 3 235 622**
**US-A- 4 644 204**

**Patent Abstracts of Japan Band 9, Nr. 201**
**(E336) (1924) 17 August 1985 & JP-**
**A-60066642**

(73) Patentinhaber: **Licentia Patent-**
**Verwaltungs-GmbH**
**Theodor-Stern-Kai 1**
**W-6000 Frankturt/Main 70(DE)**

(72) Erfinder: **Frohmüller, Klaus**
**Scheideweg 86**
**W-2900 Oldenburg(DE)**

(74) Vertreter: **Lertes, Kurt, Dr. et al**
**Licentia Patent-Verwaltungs-GmbH Theodor-**
**Stern-Kai 1**
**W-6000 Frankturt/M 70(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf einen Elektromotor entsprechend dem Oberbegriff des Anspruchs 1.

Bei Elektromotoren dieser Art besteht das Problem, daß die Befestigung der Lagerschilde am Motorgehäuse mit relativ großem Fertigungsaufwand durch Anschrauben, Vernieten, Verstemmen, Laschenverbindungen oder dergleichen erfolgt. Demgegenüber ist es für eine Vielzahl von Verbindungen einzelner aus Kunststoff gefertigter Bauteile bekannt geworden, federnde Rasthaken vorzusehen, die formschlüssig in korrespondierende Ausnehmungen eines anderen Bauteiles eingreifen. Rastverbindungen der bekannten Art sind jedoch nicht geeignet, relativ große Kräfte aufzunehmen und dabei Toleranzen einzuhalten, die denen der bisher üblichen Verbindungsarten entsprechen oder sogar noch kleiner sind.

Durch die DE-A-3 235 622 ist ein Elektromotor bekannt, bei dem die Lagerschilde aus einem Kunststoff hoher Fertigkeit hergestellt sind und in Motorachsrichtung vorspringende Ansätze besitzen, an deren freien Enden in Gehäuseausnehmungen eingreifende Rasthaken angeordnet sind. Weiterhin beschreibt die EP-A-0 168 744 einen Elektromotor, bei dem die Lagerschilde aus Kunststoff hergestellt sind und die Rastnasen direkt in entsprechende Ausnehmungen des gespritzten Rückschlusses eingreifen.

Der Erfindung liegt somit die Aufgabe zugrunde, eine Rasthakenverbindung anzugeben, durch die sowohl die erforderliche Festigkeit als auch die erforderliche Maßgenauigkeit der Verbindung sicher erreicht und eingehalten wird. Darüber hinaus soll durch geeignete Gestaltung der einzelnen Bauteile die Montage mittels Fertigungsautomaten ermöglicht werden.

Die Lösung der Aufgabe wird durch die im kennzeichnenden Teil des Anspruchs 1 beschriebenen Maßnahmen ermöglicht. Vorteilhafte Weiterbildungen der Erfindung sind in den Unteransprüchen beschrieben.

Die Erfindung bringt den Vorteil mit sich, daß die Montage der Lagerschilde erheblich vereinfacht wird, denn diese können in einer Transferstraße aus einem Vorratsbehälter heraus automatisch durch bloßes Aufsetzen und Einschieben am Motorgehäuse befestigt werden. Die Lagerschilde sind in vorteilhafter Weise als Kunststoff-Spritzgußteile relativ einfacher Form hergestellt und bestehen vorzugsweise aus einem glasfaserverstärkten Kunststoff hoher Eigenfestigkeit und Formstabilität, besitzen jedoch andererseits eine ausreichend große Federwirkung, daß etwaige Fertigungstoleranzen sowohl am Lagerschild selbst als auch an den anderen zugeordneten Bauteilen des Motors ausgleichbar sind. Ein weiterer Vorteil besteht darin, daß die Lagerschilde bei Einsatz geeigneter Werkzeuge ohne bleibende Verformung wieder lösbar und wiederverwendbar sind. Dadurch ist eine evtl. Reparatur des Motors problemlos möglich. Schließlich ergibt sich in vorteilhafter Weise die Möglichkeit, die Lagerschilde als Träger oder Gehäuse für weitere Bauteile auszubilden, ohne daß die Art der Befestigung am Motorgehäuse geändert werden müßte. Darüberhinaus ist die Rasthakenverbindung gemäß der Erfindung auch geeignet, radiale Kräfte aufzunehmen, so daß der Lagerschild auch als Flanschlagerschild ausbildbar ist.

Ein Ausführungsbeispiel der Erfindung ist in der Zeichnung dargestellt und wird im Folgenden näher beschrieben. Es zeigen:

Fig. 1 eine im Schnitt gezeichnete Seitenansicht eines Asynchronmotors,

Fig. 2 eine Darstellung des fertig montierten Motors,

Fig. 3 eine Schnittzeichnung eines Getriebemotors und

Fig. 4 dessen Ansicht in fertig montiertem Zustand.

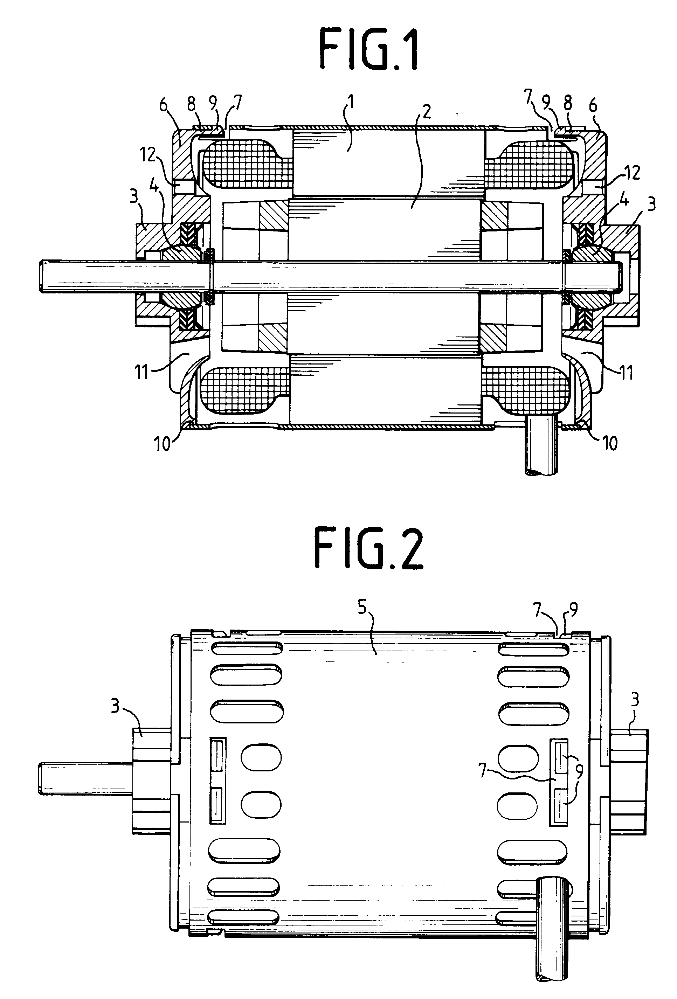

Der in der Figur 1 als Ausführungsbeispiel dargestellte Asynchronmotor besitzt einen Ständer 1 und einen Läufer 2. Der Ständer 1 ist von dem Gehäuse 5 umgeben, welches hier beispielsweise als Blechmantelgehäuse ausgebildet ist und mehrere Luftdurchtrittsöffnungen besitzt. Stirnseitig sind die Lagerschilde 3, die beide gleichartig ausgebildet sind, am Gehäuse 5 befestigt. Jeder Lagerschild 3 besitzt eine Lageraufnahme für die Lagerkörper 4, die als Gleitlagerkalotten - wie dargestellt - oder als Kugellager ausgebildet sein können.

Jeder Lagerschild 3 besitzt mehrere, gleichmäßig über seinen Umfang verteilte Versteifungsrippen 6, an deren äußeren Ende jeweils ein in Motorachsrichtung vorspringender Ansatz 8 angeordnet ist, der an seinem freien Ende einen nach radial außen gerichteten Rasthaken 9 trägt. Der Lagerschild 3 besitzt an seinem Außenumfang jeweils zwischen den Versteifungsrippen 6 kreissegmentförmige Einbuchtungen 10 mit rechtwinkligem Querschnitt, die auf der Gehäusestirnwand aufliegen und mit dieser eine formschlüssige Verbindung bilden.

Im Lagerschild 3 können Luftführungsöffnungen 11 angeordnet sein.

Die Rasthaken 9 greifen von der Gehäuseinnenseite in Ausnehmungen 7 des Gehäuses 5 formschlüssig ein. Wie aus der Fig. 2 ersichtlich, sind die Rasthaken 9 jeweils als Doppelhaken ausgebildet. Dadurch ergibt sich der Vorteil, daß die zum Herausbiegen des Hakens bzw. der Haken aus der Normallage erforderliche Kraft und die damit verbundene Materialbeanspruchung innerhalb der durch den verwendeten Werkstoff vorgegebenen Belastungsgrenzen bleibt. Die Rasthaken 9 sind an ihrer Vorderseite abgerundet oder angeschrägt, um die Einführung in das Gehäuse 5 zu erleichtern. Die Montage der Lagerschilde erfolgt ggf. gleichzeitig an beiden Gehäusestirnseiten durch Einpressen bis zur Einrastung der Rasthaken. Die Versteifungsrippen 6 mit den daran angeordneten Rasthaken 9 besitzen eine - wenn auch materialbedingt geringe - Federwirkung, die ausreicht, etwaige Toleranzen im Lagerschild und/oder Gehäuse aufzufangen. Andererseits ist die Festigkeit der Verbindung Gehäuse-Lagerschild groß genug, um den Motor am Gerät mittels in Bohrungen 12 eingedrehter selbstschneidender Schrauben anzuflanschen.

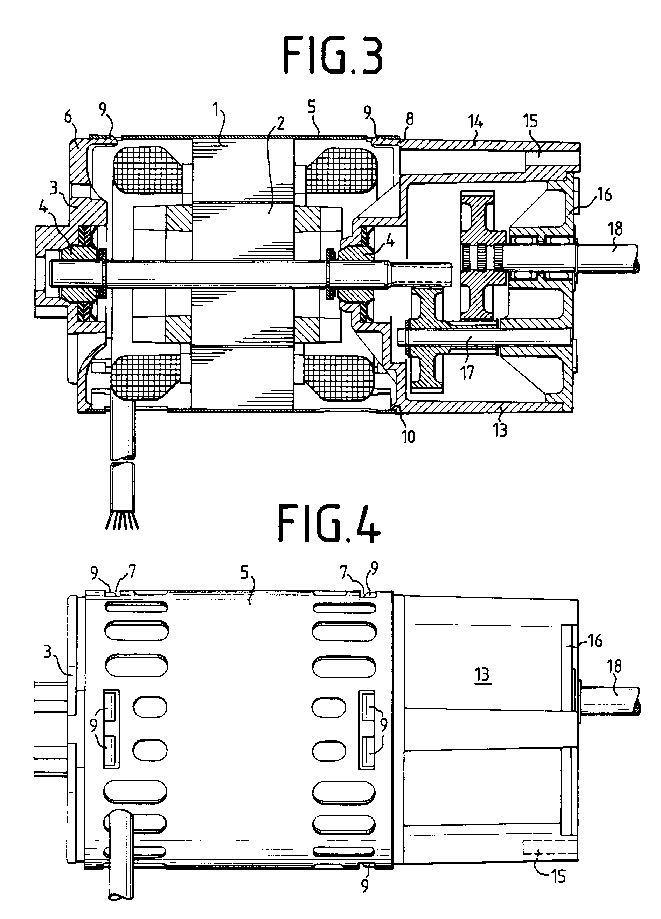

Eine Variante der beschriebenen Ausführungsform ist in den Figuren 3 und 4 dargestellt. Hier ist ein Lagerschild als Getriebegehäuse 13 ausgebildet, welches ein zweistufiges Stirnradgetriebe mit gegenüber der Motorachse versetzter Abtriebswelle aufnimmt. Die dem Gehäuse 5 zugekehrte Stirnseite des Getriebegehäuses 13 ist bezgl. der Lageraufnahme und der Befestigungsmittel dem Lagerschild 3 gleichartig ausgebildet, d. h., mit Einbuchtungen 10 und Rasthaken 9 versehen, so daß die Befestigung am Gehäuse in der oben beschriebenen Weise erfolgen kann. Anstelle der radialen Versteifungsrippen des Lagerschildes sind axial verlaufende Längsrippen 14 vorgesehen, die Bohrungen 15 zur Aufnahme der Befestigungsschrauben für die Halterung des Getriebemotors am Gerät besitzen. Das Getriebegehäuse besitzt einen formschlüssig eingepaßten Deckel 16, an welchem die Befestigung für die Zwischenachse 17 und die Lagerung für die Abtriebswelle 18 angeordnet sind. Der Deckel 16 ist beispielsweise mittels mehrerer Schrauben am Getriebegehäuse befestigt, um eine Verbindung zu erhalten, die eventuell auf die Abtriebswelle 18 einwirkende Querkräfte aufnehmen kann. Das vorgefertigte Getriebe wird auf die Stirnseite des Gehäuses 5 aufgesteckt und durch Rasthaken 9 gehalten.

Die Lagerschilde bzw. das Getriebehäuse sind vorzugsweise aus einem glasfaserverstärkten Kunststoff im Spritzgußverfahren hergestellt und besitzen eine fertigungsgerechte Formgebung, die möglichst wenig Kernzüge erfordert.

**Patentansprüche**

1. Elektromotor kleiner Leistung mit einem Gehäusemantel (5) und daran beidseitig befestigten Lagerschilden (3), welche aus einem Kunststoff hoher Festigkeit hergestellt sind und in Motorachsrichtung vorspringende Ansätze (8) besitzen, an deren freien Enden von der Innenseite des Gehäuses (5) her in die Durchbrechungen (7) eingreifende Rasthaken (9) angeordnet sind, **dadurch gekennzeichnet,** daß die Ansätze (8) in Versteifungsrippen (6) übergehen, die radial auf den Lagerschilden (3), ausgehend von den Lageraufnahmen, verlaufen, und daß die Lagerschilde (3) mit Luftführungsöffnungen (11) versehen sind.

2. Elektromotor nach Anspruch 1, **dadurch gekennzeichnet,** daß die Rasthaken (9) als Doppelhaken ausgebildet sind, die in Motorumfangsrichtung nebeneinander angeordnet sind.

3. Elektromotor nach den Ansprüchen 1 oder 2, **dadurch gekennzeichnet,** daß ein Lagerschild in Motorachsrichtung verlängert ist und ein Gehäuse (13) bildet, welches ein Getriebe aufnimmt.

4. Elektromotor nach den Ansprüchen 1, 2 oder 3, **dadurch gekennzeichnet,** daß das Getriebegehäuse (13) motorabseitig mit einem Deckel (16) verschlossen ist, an welchem mindestens eine Getrieberäder tragende Achse (17) befestigt und in welchem die Abtriebswelle (18) gelagert ist.

5. Elektromotor nach einem der vorhergehenden Ansprüche, **dadurch gekennzeichnet,** daß das Getriebegehäuse (13) auf seiner Außenseite mit in Motorachsrichtung verlaufenden rippenartigen Verdickungen versehen ist, die motorseitig in die Ansätze für die Rasthaken (9) übergehen und die motorabseitig mit Bohrungen (12) zur Aufnahme von Befestigungsschrauben versehen sind.

6. Elektromotor nach einem der vorhergehenden Ansprüche, **dadurch gekennzeichnet,** daß die Versteifungsrippen (6) mit Bohrungen (12) zur Aufnahme von Befestigungsschrauben versehen sind.

7. Elektromotor nach einem der vorhergehenden Ansprüche, **dadurch gekennzeichnet,** daß die Lagerschilde (3) bzw. das Getriebegehäuse (13) mittel in Motorachsrichtung ausgeübten Druckes am Gehäuse (5) befestigbar sind.

**Claims**

1. Low rated electric motor comprising a housing shell (5) and bearing plates (3), which are fastened thereto at both ends, are made of a high strength synthetic material and possess projections (8), which project in the axial direction of the motor and at the free ends of which are arranged detent hooks (9) engaging out from the inner side of the housing (5) into the perforations (7), characterised thereby that the projections (8) pass over into reinforcing ribs (6) which extend radially on the bearing plates (3) starting out from the bearing cavities and that the bearing plates are provided with ventilating openings (11).

2. Electric motor according to claim 1, characterised thereby, that the detent hooks (9) are constructed as double hooks, which are arranged beside one another in the circumferential direction of the motor.

3. Electric motor according to claim 1 or 2, characterised thereby, that one bearing plate is prolonged in the axial direction of the motor and forms a housing (13) which accommodates a gear.

4. Electric motor according to claims 1, 2 and 3, characterised thereby that the gear housing (13) is closed, at the end remote from the motor, by a cover (16), at which at least one axle (17) carrying gearwheels is fastened and in which the driven shaft (18) is borne.

5. Electric motor according to one of the preceding claims, characterised thereby, that the gear housing (13) is provided on its outer side with rib-like thickenings which extend in the axial direction of the motor, pass over at the motor end into the projections for the detent hooks (9) and are provided at the end remote from the motor with bores (12) for the reception of fastening screws.

6. Electric motor according to one of the preceding claims, characterised thereby, that the reinforcing ribs (6) are provided with bores (12) for the reception of fastening screws.

7. Electric motor according to one of the preceding claims, characterised thereby, that the bearing plates (3) or the gear housing (13) are fastenable to the housing (5) by means of pressure exerted in the axial direction of the motor.

**Revendications**

1. Moteur électrique de faible puissance avec une enveloppe de carter (5) et des flasques (3) fixés des deux côtés, lesquels sont fabriqués en matière plastique de haute résistance et possèdent des talons (8) faisant saillie dans le sens axial du moteur aux extémités libres desquelles, en partant de la face interne du carter (5) sont disposés des crochets à crans (9) pénétrant dans les découpures (7), caractérisé en ce que les talons (8) passent dans des nervures raidisseuses (6) qui passent radialement sur les flasques (3) à partir des logements de paliers et en ce que les flasques (3) sont équipés d'ouvertures de déflection d'air (11).

2. Moteur électrique selon la revendication 1, caractérisé en ce que les crochets à crans (9) sont réalisés comme des crochets doubles qui sont disposés l'un à côté de l'autre dans le sens phériphérique du moteur.

3. Moteur électrique selon les revendications 1 ou 2, caractérisé en ce qu'un flasque est prolongé dans le sens axial du moteur et forme un carter (13) qui reçoit les engrenages.

4. Moteur électrique selon les revendications 1, 2 ou 3, caractérisé en ce que le carter des engrenages (13) est fermé sur la face arrière du moteur par un couvercle (16), auquel est fixé au moins un axe (17) portant une roue d'engrenage et dans laquelle est logé l'arbre mené (18)

5. Moteur électrique selon l'une des revendications précédentes, caractérisé en ce que le carter (13) des engrenages est muni sur sa face externe de raidisseurs formant nervures allant dans le sens axial du moteur, qui passent côté moteur dans les talons pour les crochets à crans (9) et qui sont munis sur la face arrière du moteur de perçages (12) pour la réception des vis de fixation.

6. Moteur électrique selon l'une des revendications précédentes, caractérisé en ce que les nervures raidisseuses (6) sont munies de perçages (12) pour la réception des vis de fixation.

7. Moteur électrique selon l'une des revendications précédentes, caractérisé en ce que les flasques (3) et le carter des engrenages (13) sont fixables au carter (5) au moyen d'une pression exercée dans le sens axial du moteur.

# FIG.1

# FIG.2

# FIG.3

# FIG.4